# EUROPEAN PATENT APPLICATION

(11) **EP 2 541 001 A1**
(43) Date of publication of application: **02.01.2013**
(21) Application number: 10846586.5
(22) Date of filing: 14.10.2010
(51) Int. Cl.: F01L 3/14

(54) **METHOD FOR PRODUCING METALLIC-SODIUM-FILLED ENGINE VALVE**

(30) Priority: 26.02.2010 JP 2010041409
(71) Applicant: Mitsubishi Heavy Industries, Ltd., Tokyo 108-8215 (JP); Yoshimura Company, Nagoya-shi, Aichi 463-0002 (JP)
(72) Inventor: MORII Hirokazu, Tokyo 108-8215 (JP); MARUYAMA Kazutaka, Tokyo 108-8215 (JP); YOSHIMURA Hyoji, Nagoya-shi Aichi 463-0002 (JP)
(74) Representative: Henkel, Breuer & Partner
(86) International application number: PCT/JP2010/068004
(87) International publication number: WO 2011/104923

(57) **Abstract**

In the disclosed method, an engine valve (V) filled with metallic sodium (Na) within is produced by means of hardening metallic sodium (Na)--that has been liquefied through heat-melting--into rods by linearly discharging the metallic sodium (Na) in a liquid hydrocarbon (120), thus cooling the metallic sodium, then inserting these rods into a hollow section (H) through the opening (M) of a stem section (S), and then sealing the opening (M).

## Description

### Technical Field

The present invention relates to a method for producing an engine valve filled inside with metallic sodium.

### Background Art

In an engine valve of an automobile or the like, in order to respond to an increase in performance, a reduction in fuel consumption of an engine, and the like, the weight is reduced and the heat transmission is increased by filling an inside of the engine valve with metallic sodium.

Such an engine valve has a stem portion which has a hollow portion formed in an inner portion and which has an opening formed at an upper end. To this stem portion, for example, (1) solid metallic sodium is extruded into a bar shape, cut into a predetermined length, and then inserted into the hollow portion from the opening; or (2) solid metallic sodium is heated to melt (about 120°C to 300°C) into a liquid state and then put into the hollow portion by injecting a predetermined amount of metallic sodium into the hollow portion from the opening. Thereafter, the opening is sealed and the engine valve is thus produced (for example, see Patent Literatures 1 to 3 and the like listed below).

### Citation List

### Patent Literatures

Patent Literature 1: Japanese Patent Application Publication No. Hei 03-018605
Patent Literature 2: Japanese Patent Application Publication No. Hei 04-232318
Patent Literature 3: Japanese Patent Application Publication No. Hei 04-272413

### Summary of Invention

### Technical Problem

However, a conventional method for producing a metallic-sodium-filled engine valve as described above has the following problems.

(1) Solid metallic sodium is difficult to extrude and the workability of shaping the solid metallic sodium is thereby poor.
(2) When liquid metallic sodium adheres to an inner wall of the elongated hollow portion (a diameter of about 2 to 4 mm) during the injection of liquid metallic sodium into the hollow portion, metallic sodium immediately cools and becomes solid thereby closing the hollow portion. Thus, the liquid metallic sodium needs to be injected while the stem portion is heated (98°C or higher) and the workability of injection is thereby poor.

The present invention is made in view of the problems describe above, and an object thereof is to provide a method for producing a metallic-sodium-filled engine valve by which metallic sodium can be easily put into the inside of an engine valve.

### Solution to Problem

In a method for producing an engine valve filled inside with metallic sodium, according to a first aspect of the invention for solving the aforementioned problems, the engine valve is produced by: putting metallic sodium into a hollow portion from an opening of a stem portion having the hollow portion in an inner portion and having the opening at an upper end; and thereafter sealing the opening, the method characterized by comprising: cooling and solidifying metallic sodium heated and melted to a liquid state into a bar-shaped piece; and thereafter inserting the bar-shaped piece of metallic sodium into the hollow portion from the opening of the stem portion.

The method for producing a metallic-sodium-filled engine valve according to a second aspect of the invention is characterized in that, in the first aspect of the invention, the metallic sodium heated and melted to a liquid state is discharged linearly into a hydrocarbon-based liquid and is cooled to be solidified into the bar-shaped piece.

The method for producing a metallic-sodium-filled engine valve according to a third aspect of the invention is characterized in that, in the first aspect of the invention, the metallic sodium heated and melted to a liquid state is injected into a bar-shaped space in an inside of a metal mold having the space in the inside and is then cooled to be solidified into the bar-shaped piece.

The method for producing a metallic-sodium-filled engine valve according to a fourth aspect of the invention is characterized in that, in the third aspect of the invention, the bar-shaped space of the metal mold is formed such that at least an end portion on one side is formed in a tapered shape or an elongated ellipse shape.

### Advantageous Effects of Invention

In the method for producing a metallic-sodium-filled engine valve of the present invention, the metallic sodium heated and melted to a liquid state is cooled to be solidified into a bar-shaped piece and the bar-shaped piece of metallic sodium is thereafter inserted into the hollow portion from the opening of the stem portion. Thus, the bar-shaped piece of metallic sodium can be easily shaped without performing extrusion and a predetermined amount of metallic sodium can be easily put into the hollow portion without heating the stem portion of the engine valve.

### Brief Description of Drawings

[Fig. 1] Fig. 1 is a view for explaining a first embodiment of a method for producing a metallic-sodium-filled engine valve of the present invention.
[Fig. 2] Fig. 2 is an explanatory view subsequent to Fig. 1.
[Fig. 3] Fig. 3 is a view for explaining a second embodiment of a method for producing a metallic-sodium-filled engine valve of the present invention.
[Fig. 4] Fig. 4 is an explanatory view subsequent to Fig. 3.

### Description of Embodiments

Embodiments of a method for producing a metallic-sodium-filled engine valve of the present invention are described below based on the drawings. However, the present invention is not limited to the embodiments described below based on the drawings.

### <First Embodiment>

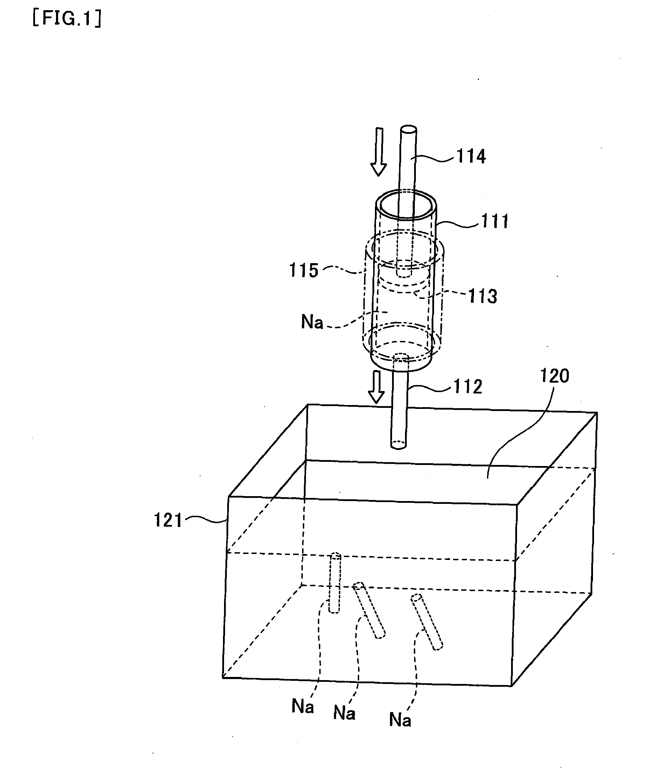

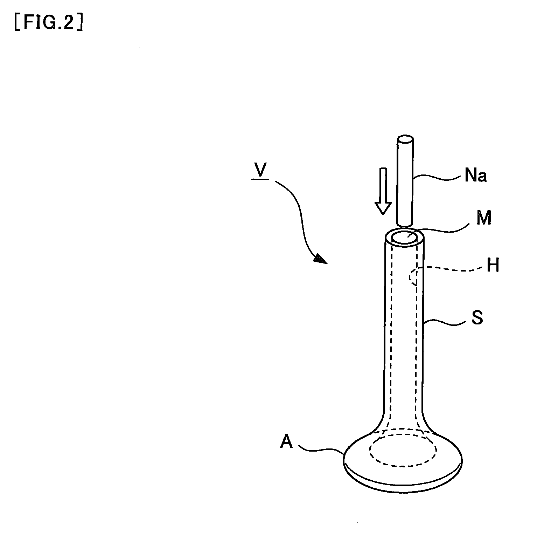

A first embodiment of a method for producing a metallic-sodium-filled engine valve of the present invention is described based on Figs. 1, 2.

In Fig. 1, a cylinder is denoted by reference numeral 111 and is provided with a nozzle 112 on a leading end side. A piston is denoted by reference numeral 113 and is disposed in the cylinder 111 to be slidingly moveable. A piston rod is denoted by reference numeral 114 and is connected to the piston 113 to cause the piston 113 to move. A heater is denoted by reference numeral 115 and is disposed to cover an outer periphery of the cylinder 111 and also configured to be capable of heating the inside of the cylinder 111 and keeping it warm (for example, about 120°C to 300°C). Reference numeral 121 denotes a container and a hydrocarbon-based liquid 120 such as an oil is put in the container 121.

In a dry inert gas atmosphere such as a dry nitride gas: the cylinder 111 is arranged above the container 121 with the nozzle 112 facing downward; a piece of solid metallic sodium Na cut out in a predetermined size is put into an inside of the cylinder 111 and the piston 113 is inserted into the inside of the cylinder 111; the heater 115 is activated to heat and melt the piece of metallic sodium Na to a liquid state; the piston 113 is then pushed by using the piston rod 114 and the metallic sodium Na melted to a liquid state is thereby discharged linearly (in a bar shape) from the nozzle 112; and the discharged piece of metallic sodium Na falls into the hydrocarbon-based liquid 120 in the container 121 and is cooled to a room temperature to be solidified while maintaining its linear shape (bar shape).

Next, as shown in Fig. 2, the bar-shaped piece of metallic sodium Na of a predetermined amount is inserted from an opening M at an upper end of a stem portion S in such a way that the bar-shaped piece of metallic sodium Na is put into a hollow portion H in an inner portion of the stem portion S. Thereafter, the opening M is closed. Thus, an engine valve V filled inside with the predetermined amount of metallic sodium Na can be obtained.

In other words, in the embodiment, metallic sodium Na heated and melted to a liquid state is discharged linearly (in a bar shape) into the hydrocarbon-based liquid 120, cooled to the room temperature to be solidified, and is then inserted into the hollow portion H from the opening M of the stem portion S.

Thus, in the embodiment, the bar-shaped piece of metallic sodium Na can be easily shaped without performing extrusion and the predetermined amount of metallic sodium Na can be easily put into the hollow portion H without heating (98°C or higher) the stem portion S of the engine valve V.

Accordingly, in the embodiment, the predetermined amount of metallic sodium Na can be easily put into the inside of the engine valve V.

Moreover, Patent Literature 2 and the like have the following problem. In Patent Literature 2, metallic sodium Na is cooled and solidified by causing coolant such as liquid nitrogen to flow out from a nozzle when the metallic sodium Na heated and melted is sent out from the nozzle. Thus, moisture in the air is also cooled and frost is formed on a surface of cooled metallic sodium Na. As a result, the moisture and the metallic sodium Na react with each other. However, in the embodiment, the metallic sodium Na heated and melted is cooled and solidified by causing the metallic sodium Na to fall into the hydrocarbon-based liquid 120. Thus, the formation of frost on the surface of cooled metallic sodium Na can be surely prevented.

### <Second Embodiment>

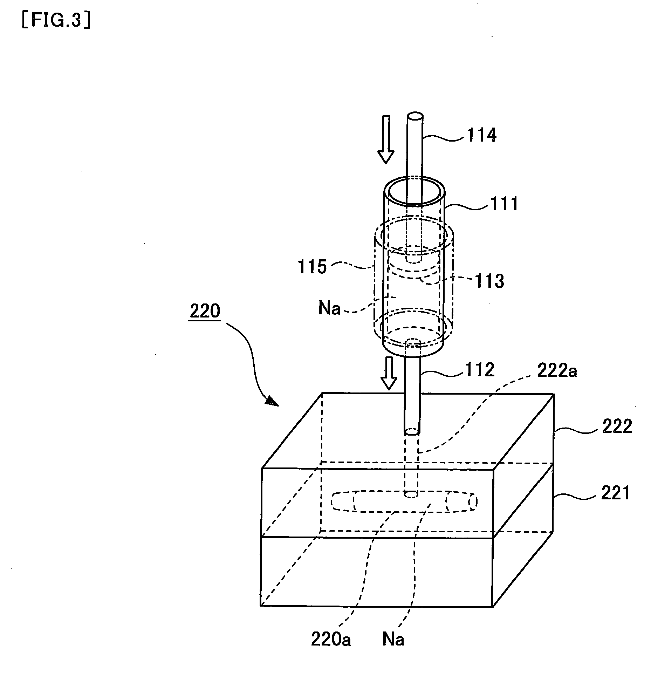

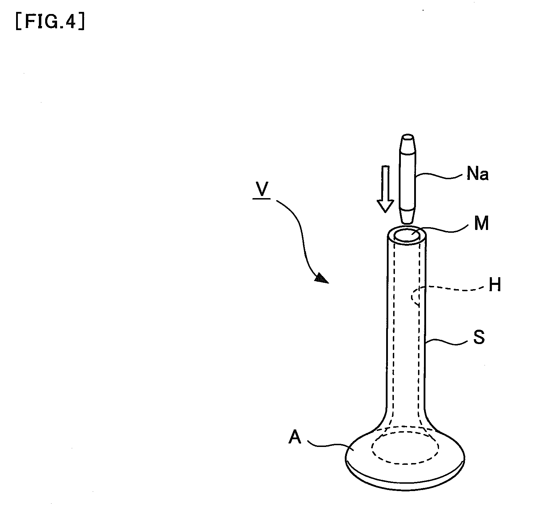

A second embodiment of a method for producing a metallic-sodium-filled engine valve of the present invention is described based on Figs. 3, 4. Note that, portions same as the first embodiment are denoted with the same reference numerals as those used in the descriptions of the aforementioned first embodiment and descriptions which overlap with the descriptions of the aforementioned first embodiment are omitted.

In Fig. 3, a metal mold is denoted by reference numeral 220 and is configured such that a bar-shaped space 220a whose end portions respectively on both sides are tapered is formed by causing a top face of a lower mold 221 and a bottom face of an upper mold 222 to overlap each other. In a top face of the upper mold 222, a communication port 222a communicating the space 220a and a space above the top face thereof is formed.

In a dry inert gas atmosphere such as a dry nitride gas: the nozzle 112 is inserted into the communication port 222a in the upper mold 222 of the metal mold 220; a piece of solid metallic sodium Na cut out in a predetermined size is put into an inside of the cylinder 111 and the piston 113 is inserted into the inside of the cylinder 111; the heater 115 is activated to heat and melt the piece of metallic sodium Na to a liquid state; and the piston 113 is then pushed by using the piston rod 114 and the metallic sodium Na melted to a liquid state is thereby injected into the space 220a from the communication port 222a of the metal mold 220 through the nozzle 112.

After a predetermined amount of metallic sodium Na is injected into the space 220a of the metal mold 220, the nozzle 112 is removed from the communication port 222a of the metal mold 220 and the metal mold 220 is then left to cool to a room temperature. When the metal mold 220 cools, the metallic sodium Na in the space 220a of the metal mold 220 is solidified into a piece having a shape of the space 220a, i.e. the bar shape whose end portions respectively on both sides are tapered.

Next, the lower mold 221 and the upper mold 222 of the metal mold 220 are separated from each other and the piece of metallic sodium Na solidified in the bar shape having the tapered end portions is taken out. Then, as shown in Fig. 4, the piece of metallic sodium Na is inserted from the opening M at the upper end of the stem portion S in such a way that the piece of metallic sodium Na is put into the hollow portion H in the inner portion of the stem portion S. Thereafter, the opening M is closed. Thus, the engine valve V filled inside with the predetermined amount of metallic sodium Na can be obtained.

In the first embodiment, the bar-shaped piece of metallic sodium Na is shaped as follows. The metallic sodium Na heated and melted to a liquid state is discharged linearly (in a bar shape) into the hydrocarbon-based liquid 120 and then cooled to the room temperature to be solidified. However, in the second embodiment, the bar-shaped piece of metallic sodium Na having the tapered end portions is shaped as follows. The metallic sodium Na heated and melted to a liquid state is injected into the space 220a in the metal mold 220 from the communication port 222a of the metal mold 220 and then cooled to the room temperature to be solidified.

Thus, in the second embodiment, the bar-shaped piece of metallic sodium Na can be easily shaped without performing extrusion and metallic sodium Na can be put into the hollow portion H without heating (98°C or higher) the stem portion S of the engine valve V, as similar to the first embodiment.

Accordingly, in the second embodiment, the predetermined amount of metallic sodium Na can be easily put into the inside of the engine valve V as in the first embodiment as a matter of course. Furthermore, it is possible to easily obtain the bar-shaped piece of metallic sodium Na shaped such that end portions thereof respectively on both sides are tapered, i.e. the bar-shaped piece of metallic sodium Na which can be easily inserted into the elongated hollow portion H (a diameter of about 2 to 4 mm). In addition, the piece of metallic sodium Na can be inserted into the inside of the engine valve V more easily.

### <Other Embodiments>

In the aforementioned first embodiment, the piece of metallic sodium Na may be obtained as follows. The metallic sodium Na discharged linearly (in a bar shape) is caused to continuously fall into the hydrocarbon-based liquid 120 and then cooled to be solidified in such a way that an elongated bar material of metallic sodium Na is obtained. Thereafter, the bar material is cut in a required length and the cut piece is put into the hollow portion H of the engine valve V. Alternatively, the piece of metallic sodium Na may be obtained as follows. The metallic sodium Na is caused to intermittently fall into the hydrocarbon-based liquid 120 and then cooled to be solidified in such a way that bar materials of the required length are obtained. Thereafter, each of the bar materials can be inserted into the hollow portion H of the engine valve V without being cut.

In the aforementioned second embodiment, descriptions are given of the case where the bar shaped piece of metallic sodium Na whose end portions respectively on both sides are tapered is shaped with the metal mold 220. However, as other embodiments, a bar-shaped piece of metallic sodium Na whose end portion on one side alone is tapered or a bar-shaped piece of metallic sodium Na having an elongated ellipse shape may be shaped with a metal mold, for example. Even in such cases, operational effects similar to the case of the aforementioned second embodiment can be obtained.

Moreover, in the aforementioned second embodiment, descriptions are given of the case where the bar-shaped piece of metallic sodium Na is obtained one by one by using the metal mold 220 having the single space 220a. However, as another embodiment, it is also possible to obtain multiple bar-shaped pieces of metallic sodium Na simultaneously by using, for example, a metal mold having multiple spaces.

### Industrial Applicability

In the method for producing a metallic-sodium-filled engine valve of the present invention, the bar-shaped piece of metallic sodium can be easily shaped without performing extrusion and the predetermined amount of metallic sodium can be easily put into the hollow portion without heating the stem portion of the engine valve. Thus, the method can be used very effectively in the industrial field.

### Reference Signs List

- 111: cylinder
- 111a: discharge port
- 112: piston
- 113: piston rod
- 114: heater
- 120: hydrocarbon-based liquid
- 121: container
- 220: metal mold
- 220a: space
- 221: lower mold
- 222: upper mold
- 222a: communication port
- Na: metallic sodium
- V: engine valve
- A: umbrella portion
- S: stem portion
- H: hollow portion
- M: opening

## Claims

1. A method for producing an engine valve filled inside with metallic sodium, the engine valve produced by: putting metallic sodium into a hollow portion from an opening of a stem portion having the hollow portion in an inner portion and having the opening at an upper end; and thereafter sealing the opening, the method **characterized by** comprising:
cooling and solidifying metallic sodium heated and melted to a liquid state into a bar-shaped piece; and
thereafter inserting the bar-shaped piece of metallic sodium into the hollow portion from the opening of the stem portion.

2. The method for producing a metallic-sodium-filled engine valve according to claim 1, **characterized in that** the metallic sodium heated and melted to a liquid state is discharged linearly into a hydrocarbon-based liquid and is cooled to be solidified into the bar-shaped piece.

3. The method for producing a metallic-sodium-filled engine valve according to claim 1, **characterized in that** the metallic sodium heated and melted to a liquid state is injected into a bar-shaped space in an inside of a metal mold having the space in the inside and is then cooled to be solidified into the bar-shaped piece.

4. The method for producing a metallic-sodium-filled engine valve according to claim 3, **characterized in that** the bar-shaped space of the metal mold is formed such that at least an end portion on one side is formed in a tapered shape or an elongated ellipse shape.
